(19) Europäisches Patentamt
European Patent Office
Office européen des brevets

(11) EP 1 721 727 B1

(12) EUROPEAN PATENT SPECIFICATION

(45) Date of publication and mention
of the grant of the patent:
**25.11.2009 Bulletin 2009/48**

(51) Int Cl.:
***B29D 30/30*** (2006.01)     ***B29D 30/48*** (2006.01)

(21) Application number: 05719791.5

(22) Date of filing: 02.03.2005

(86) International application number:
**PCT/JP2005/003476**

(87) International publication number:
**WO 2005/082609 (09.09.2005 Gazette 2005/36)**

(54) **TRANSFER DRUM MANUFACTURING METHOD AND TRANSFER DRUM**

VERFAHREN ZUR HERSTELLUNG EINER TRANSFERTROMMEL UND TRANSFERTROMMEL

PROCÉDÉ DE FABRICATION D'UN TAMBOUR DE TRANSFERT ET TAMBOUR DE TRANSFERT

(84) Designated Contracting States:
**DE FR HU IT**

(30) Priority: **02.03.2004 JP 2004057144**

(43) Date of publication of application:
**15.11.2006 Bulletin 2006/46**

(73) Proprietor: **Bridgestone Corporation**
**Tokyo 104-8340 (JP)**

(72) Inventor: **SUDA, Nobuyuki**
**c/o BRIDGESTONE CORPORATION**
**Kodaira-shi, Tokyo 187-8531 (JP)**

(74) Representative: **Whalley, Kevin**
**Marks & Clerk LLP**
**90 Long Acre**
**London WC2E 9RA (GB)**

(56) References cited:
**EP-A- 1 293 333      WO-A1-02/102579**
**GB-A- 1 223 242      JP-A- 9 001 693**
**JP-A- 2001 315 219    JP-A- 2002 086 585**
**JP-U- 54 090 563      US-A- 5 149 390**

**Description**

TECHNICAL FIELD

The present invention relates to a method for producing a transfer drum in a simple manner and at low cost, and also to a transfer drum produced by such a method. The transfer drum to which the present invention is concerned is used to apply thereon a plurality of strip-like rubber materials or rubber-coated cord materials of predetermined width and length over a predetermined angular range on the outer peripheral surface such that they can be then transferred onto the entire periphery of a forming drum or the like having a predetermined outer diameter, to thereby form an inner liner layer, carcass ply layer, etc.

Examples for a forming drum and a fransfer drum can be found in JP 2002 086 585 A and EP 1 293 333 A2.

BACKGROUND ART

This type of conventional transfer drum is rotated about its center axis and produced by a method wherein a center shaft is arranged to extend through a pair of disc-like end plates which are spaced from each other by a predetermined distance and coaxially arranged in parallel with each other, and three bent plates made of aluminum having an arcuate cross-section with a center angle of 120° are bridged between the outer peripheral surfaces of these end plates with their ends fixedly secured to the end plates by bolts.

DISCLOSURE OF THE INVENTION

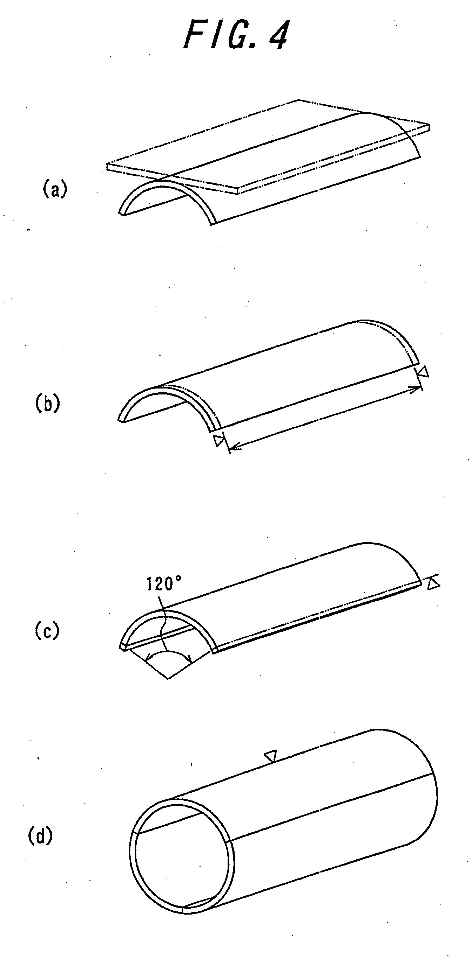

When transfer drums are produced in this way, there is a problem in terms of the number of the required processing steps, which will be described below with reference to FIGS. 4(a) to 4(d), by way of example. First of all, three rectangular aluminum plates are prepared by previously cutting a blank into the predetermined dimension. As shown in FIG 4(a), each aluminum plate is subjected to bending to have a radius of curvature in its width direction, which corresponds to the shape of the end plates, and also to grinding on its inner surface into conformity with the peripheral surfaces of the end plates. The aluminum plate is then subjected to end machining to have a predetermined length, as shown in FIG 4(b), and also to side processing to have a center angle of 120° as seen in the circumferential direction of the aluminum plate. The three aluminum plates so prepared are assembled into a cylindrical shape by using appropriate fixture, as shown in FIG 4(d), and subjected to a surface processing so that the outer surfaces of the aluminum plates as a whole have a desired degree of accuracy. Such a problem becomes more important when, in particular, a high level of processing accuracy is necessary.

The present invention has been achieved in view of the above-mentioned problem. It is an object of the present invention to provide a transfer drum production method that allows the desired transfer drum to be produced simply, rapidly, at low cost and with high accuracy, as well as a transfer drum produced by such a method.

This task is solved by the transfer drum production method according to claim 1, wherein a pair of end plates in the form of a flat plate or disc having a polygonal or circular contour shape are prepared and coaxially arranged at a predetermined distance and in parallel with each other. A plurality of aluminum profiled members formed from an aluminum raw material including an aluminum alloy are prepared by extrusion process or drawing process. The aluminum profile members are oriented perpendicularly to the end plates and bridged between the end plates so that the profiled members are aligned over the entire peripheries of the end plates and fixedly connected to the end plates, respectively, thereby forming a drum that is cylindrical as a whole, wherein arcuate outer surfaces of the profiled members are continuous with each other, through mutual abutting surfaces therebetween.

It is preferred that a plurality of vacuum suction holes are formed directly or indirectly in each profiled member, at a distance in a longitudinal direction thereof.

The present invention also provides a transfer drum according to claim 3 comprising a pair of end plates which are coaxially arranged at a predetermined distance and in parallel with each other, and a plurality of straight aluminum profiled members bridging between the end plates in parallel with a center axis of the end plates, said aluminum profiled members being aligned over the entire peripheries of the end plates in abutment with each other, and fixedly connected to the end plates, and said aluminum profiled members each having an arcuate surface, as seen in a direction perpendicular to the longitudinal direction thereof, with a same radius of curvature.

In such a transfer drum, it is preferred that the profiled members each has a dimension 1 as measured in a direction perpendicular to its longitudinal direction, said dimension being expressed as:

$$l = n \times 25.4 \ (\text{mm}) \qquad (n = 1, 1.5, 2, 2.5, 3).$$

It is further preferred that a hole member is provided for each of the profiled members, wherein the hole member has a plurality of vacuum suction holes arranged at a distance in a longitudinal direction thereof.

In the method according to the present invention, the peripheral surface of the transfer drum is formed by a plurality of aluminum profiled members prepared by extrusion process or drawing process. Such profiled members can be produced in short a time, at a low cost, and with high accuracy, and can be readily installed to the end plates requiring only end and side processing with respect to the profiled members. It is therefore possible to produce highly accurate transfer drum with a reduced number of processing steps, simply, rapidly, and at low cost.

In this instance, when each profiled member is formed with a plurality of vacuum suction holes, strip-shaped rubber materials or rubber-coated materials can be attracted and held on the peripheral surface of the transfer drum not only by the adhesion force inherent to the rubber materials themselves, but also by the vacuum suction force. Therefore, it is possible to positively prevent unintended separation or removal of the desired number of rubber materials. Moreover, by releasing the attraction under vacuum, the materials which had been held on the transfer drum can be positively transferred onto the peripheral surface of the forming drum or the like.

In the transfer drum according to the present invention, the peripheral surface of the transfer drum is formed by the profiled members of the same shape and size strictly controlled by dies or rollers for the extrusion process or drawing process. Therefore, it is possible to sufficiently improve the accuracy of the transfer drum and, in particular, its peripheral dimension.

In such a transfer drum, when profiled members each has a dimension I as measured in a direction perpendicular to its longitudinal direction, said dimension being expressed as:

$$l = n \times 25.4 \, (\text{mm}) \qquad (n = 1, 1,5, 2, 2.5, 3),$$

it is possible to readily realize the peripheral length of the transfer drum, which corresponds to the tire size identified with the inch size, more directly the size of the green tire and, in particular, the nominal size of the rim diameter.

When the transfer drum has a sufficiently large peripheral length, it can be applied to the production of green tires of various sizes. The circumferential length of the transfer drum may be determined such that rubber-coated materials corresponding to two or more layers can be adhered in advance, for allowing simultaneous formation of two or more layers of carcass ply on the transfer drum.

In this instance, furthermore, when a hole member is provided for each of the profiled members by fitting or the like, wherein the hole member has a plurality of vacuum suction holes arranged at a distance in a longitudinal direction thereof, it is possible to readily carry out extrusion or the like of the profiled members free from the hole members.

## BRIEF DESCRIPTION OF THE DRAWINGS

FIG 1 is a perspective view showing one embodiment of the method according to the present invention.

FIGS. 2(a) to 2(c) are views showing another embodiment of the aluminum profiled member.

FIG 3 is a perspective view showing the manner of use of the transfer drum.

FIGS. 4(a) to 4(d) are perspective views showing the process steps for the conventional aluminum plate.

## BEST MODE FOR CARRYING OUT THE INVENTION

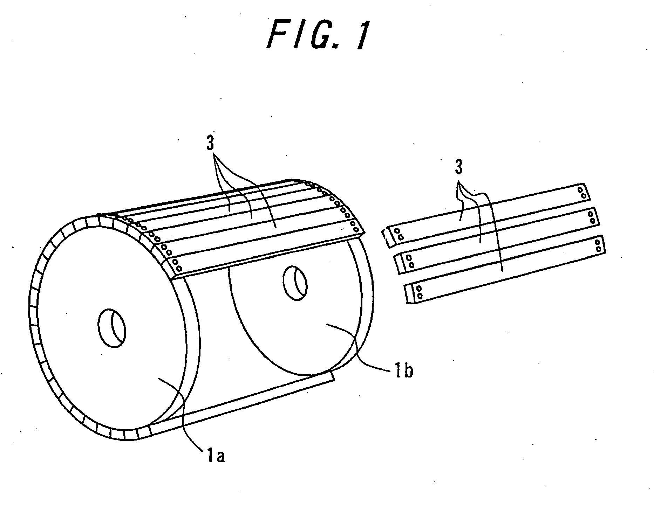

FIG 1 is a perspective view showing one embodiment of the method according to the present invention, in a step wherein aluminum profiled members are being installed. Here, a pair of end plates 1a, 1b to be fixedly secured to a center driving shaft are coaxially arranged at a predetermined distance and in parallel with each other. Each end plate 1a, 1b may be in the form of a flat plate members having a circular contour, as shown, or a polygonal contour, or may be in the form of a dish-like member.

A plurality of straight profiled members 3 made of aluminum are prepared, which have been formed by extruding or drawing a raw aluminum material to have a cross-sectional contour shape with the desired high accuracy. These profiled members 3 are bridged between the end plates 1a, 1b, in parallel with the center axis of the end plates 1a, 1b. The profiled members 3 are arranged so that their side surfaces are in abutment with each other, and fixedly secured by bolts or the like, at their both ends, to the periphery of the end plates 1a, 1b. Such installation steps are repeated over the entire periphery of the end plates 1a, 1b, so as to produce a highly accurate transfer drum in a facilitated manner, requiring only a reduced number of processing steps, i.e., the end cutting and machining of securing holes, with respect to each profiled member 3.

When the end plates have a polygonal contour shape, the inner surface shape of the aluminum profiled member is defined by a flat surface, and the outer surface shape is an arcuate surface having a predetermined radius of curvature as seen in a direction perpendicular to the longitudinal direction of the profiled member.

When the aluminum profiled members 3 are formed, for example, by extrusion process, it would be desirable to sufficiently improve the processing accuracy in connection with the radius of curvature at the outer surface of the profiled member, or its width. To this end, for example, controls are preferably carried out in terms of the quality of the aluminum raw material to be extruded, the extrusion temperature of the raw material, wear of the extrusion dies, extrusion speed, cooling temperature, processing room temperature, etc. Moreover, the extruded profiled members are preferably subjected to sufficient removal of those portions situated on the leading and trailing sides of a stably extruded portion.

When such aluminum profiled members 3 are used to produce the transfer drum, the extrusion can be carried out in short a time so that the cost of extrusion process can be sufficiently reduced. Also, the aluminum profiled body itself is low at cost and easy to sufficiently improve the processing accuracy, since it requires a small number of processing steps with respect to the extruded body. Therefore, it is possible to produce highly accurate transfer drums easily and rapidly.

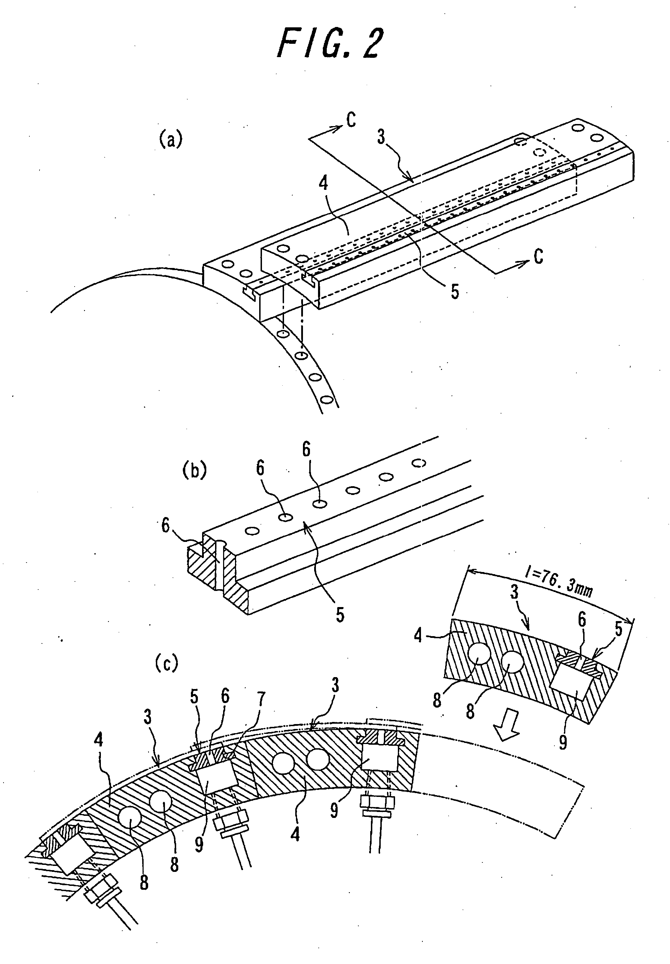

Another embodiment of the aluminum profiled member is shown in FIGS. 2(a) to 2(c), wherein the aluminum profiled member 3 is comprised of a profiled member main body 4 formed by an extrusion process or a drawing process, and a hole member 5 formed by an extrusion process or a drawing process separately from the profiled member main body to have a substantially inverted T-shaped cross-section, as shown in FIG 2(b). The hole member 5 is substantially same in length as the profiled member 3.

The hole member 5 is straight in shape, and is formed afterwards with a plurality of vacuum suction holes 6 at an interval in the longitudinal direction, which extend through the hole member in its thickness direction. The hole member 5 has an arcuate outer surface having the same radius of curvature as the profiled member main body 4, in a direction perpendicular to the longitudinal direction. It is preferred, in connection with a rubber material exhibiting a low adhesion force, that the outer surface of the bore member 5 is a polished surface formed with a hard chromium plated layer in order to enhance the adhesion force, so as to ensure that the rubber members are rubber-coated members are positively held on the transfer drum in combination with the attraction by vacuum.

As shown in FIG 2(c) which is a cross-sectional view taken along the line C-C in FIG 2(a), each profiled member main body 4 has a substantially inverted T-shaped straight groove 7 extending along the entire length thereof, in which the hole member 5 can be fitted. The hole member 5 fixedly secured to the profiled member main body 4 as being filled into the inverted T-shaped groove 7 has an outer surface that is flush with the outer surface portions of the profiled member main body 4 without unevenness, in the cross-section illustrated. The hole member 5 can be fixedly arranged in place by carrying out shrink fitting. Alternatively, with the hole member 5 fitted into the inverted T-shaped groove 7, appropriate plug members may be inserted and fixedly secured to the end portions of the inverted T-shaped groove 7, or the open ends of the inverted T-shaped groove 7 may be closed by threadedly connecting end plates therewith.

Here, the reference numeral 8 in FIG 2(c) designates thickness adjusting holes provided in each profiled member main body 4, for realizing a balanced thickness distribution in the width direction of the profiled member main body 4 so as to mitigate distortion in the extruded or drawn material and thereby improve the dimensional accuracy.

In order for the vacuum suction holes 6 in the hole member 5 to achieve their intended function, a backside groove 9 is provided behind the inverted T-shaped groove 7 of the profiled member main body 4. The backside groove 9 is opened into the inverted T-shaped groove 7, extends in the longitudinal direction of the inverted T-shaped groove 7 and has closed ends on both sides. The backside groove 9 is connected to a vacuum suction means in the form of a vacuum pump or the like, via at least one through-hole formed at the bottom of the backside groove 9.

With such an arrangement of the transfer drum, when vacuum generated by the vacuum suction means is applied to the vacuum suction holes 6 via the backside groove 9, the rubber materials or rubber-coated materials are positively attracted and held on the aluminum profiled members 3 forming the transfer drum, as shown by imaginary lines in FIG 2(c).

In the embodiment shown in FIG 2(c), the outer surface of the aluminum profiled member 3 has a dimension 1 of 76.3 mm (about 3 inches), as seen in the circumferential direction. It is preferred that this dimension is determined according to the following expression:

$$l = n \times 25.4 \, (mm) \qquad (n = 1, 1.5, 2, 2.5, 3).$$

In particular, when the processing accuracy, installation operability, stock control of the profiled member 3 and the width of the member to be attracted are taken into consideration, it is further preferred that n is 1 or 1.5 or 3.

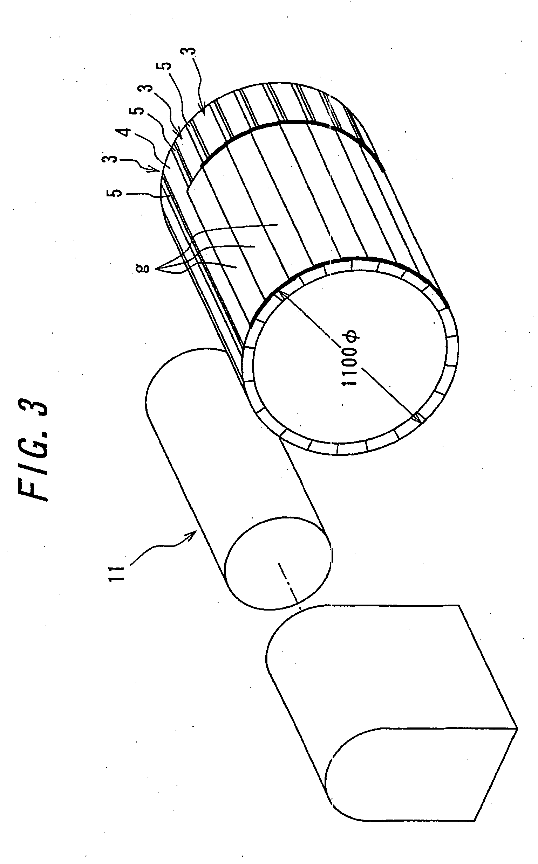

In a practical example of such transfer drum, the outer diameter of the drum is 1,100 mm, the aluminum profiled members are each fitted and fixedly secured with a hole member such as that explained with reference to FIGS. 2(a) to 2(c), the outer surface of the bore member 5 is a polished surface formed with a hard chromium plated layer, the distance between the vacuum suction holes is 25 mm in the longitudinal direction and 76.3 mm in the circumferential direction, and the thickness of the aluminum profiled member 3 is 25 mm. In use, a plurality of strip-like rubber materials g having a width of 80 mm are successively applied onto the peripheral surface of the drum, as shown in FIG 3, under an indexing movement of the drum, with their end portions in the direction of the center axis are aligned with each other, and the side edges mutually overlapped by a predetermined amount. Thus, the rubber materials extend over a predetermined angular range in the circumferential direction, and are held in place by the adhesion force inherent to the rubber materials and also by the vacuum suction force, ready to be transferred onto the forming drum 11 where they are integrated.

In order to transfer the rubber materials from the transfer drum onto the forming drum 11, the peripheral surface of the transfer drum is approached to the peripheral surface of the forming drum 11 which is positioned and maintained at a predetermined location, with the center axes of both drums maintained in parallel with each other. When these drums come into contact with each other, the suction under vacuum in the transfer drum is released, at least one drum is brought into rotation so that the two drums are rotated at the same peripheral speed, and all the rubber materials on the transfer drum are transferred onto the forming drum 11 over the distance of its one turn, for example, so as to form a single layer of the inner liner, for example.

**Claims**

1.  A method for producing transfer drums, comprising:

    providing a pair of end plates (1a, 1b) which are coaxially arranged at a predetermined distance and in parallel with each other;
    preparing a plurality of aluminium profiled members (3) by extruding or drawing a raw aluminium material to have an arcuate outer surface;
    bridging the plurality of aluminium profiled members (3) between the end plates (1a, 1b) so that the profiled members are aligned over the entire peripheries of the end plates;
    fixedly securing end portions of the profiled members (3) to the end plates (1a, 1b), respectively, thereby forming a drum that is cylindrical as a' whole,
    wherein the arcuate outer surfaces of the profiled members (3) thus secured are continuous with each other, through mutual abutting surfaces therebetween.

2.  A method for producing transfer drums as claimed in claim 1, further comprising forming a plurality of vacuum suction holes (6) in each profiled member (3), at a distance in the longitudinal direction thereof.

3.  A transfer drum, comprising:

    a pair of end plates (1a, 1b) which are coaxially arranged at a predetermined distance and in parallel with each other; and
    a plurality of straight aluminium profiled members (3) which have been prepared by extruding or drawing a raw aluminium material to have an arcuate outer surface, said plurality of aluminium profiled members bridging between the end plates (1a, 1b) in parallel with a center axis of the end plates, said aluminium profiled members (3) being aligned over the entire peripheries of the end plates (1a, 1b) in abutment with each other, and fixedly connected to the end plates, and said aluminium profiled members (3) each having an arcuate surface, as seen in a section perpendicular to the longitudinal direction thereof, with the same radius of curvature.

4.  A transfer drum as claimed in claim 3, wherein said profiled members (3) each has a dimension (1) as measured in a direction perpendicular to its longitudinal direction, said dimension being expressed as:

$$l = n \times 25.4 \ (mm) \quad (n = 1, 1.5, 2, 2.5, 3).$$

5.  A transfer drum as claimed in claim 3 or 4, further comprising a hole member (5) provided for each of the profiled members (3), said hole member (5) having a plurality of vacuum suction holes (6) arranged at a distance in the longitudinal direction thereof.

**6.** A transfer drum as claimed in any of claims 3 to 5, further comprising thickness adjusting holes (8) provided in each profiled member for realizing a balanced thickness distribution in the width direction of the profiled member.

**Patentansprüche**

**1.** Verfahren zur Herstellung von Transfertrommeln, das die folgenden Schritte aufweist:

Bereitstellen eines Paares von Endplatten (1a, 1b), die koaxial mit einem vorgegebenen Abstand und parallel zueinander angeordnet sind;
Herstellen einer Vielzahl von Aluminiumprofilelementen (3) durch Extrudieren und Ziehen eines Aluminiumrohmaterials, um eine bogenförmige Außenfläche aufzuweisen;
Überbrücken der Vielzahl von Aluminiumprofilelementen (3) zwischen den Endplatten (1a, 1b), so dass die Profilelemente über den gesamten Umfang der Endplatten ausgerichtet sind;
stationäres Sichern der Endabschnitte der Profilelemente (3) jeweils an den Endplatten (1a, 1b), um **dadurch** eine Trommel zu bilden, die als Ganze zylindrisch ist,
wobei die bogenförmigen Außenflächen der Profilelemente (3), die auf diese Weise gesichert werden, mittels gegenseitig anstoßender Flächen dazwischen miteinander kontinuierlich sind.

**2.** Verfahren zur Herstellung von Transfertrommeln nach Anspruch 1, das außerdem den Schritt des Bildens einer Vielzahl von Vakuumsauglöchern (6) in jedem Profilelement (3) in einem Abstand in dessen Längsrichtung aufweist.

**3.** Transfertrommel, die aufweist:

ein Paar Endplatten (1a, 1b), die koaxial mit einem vorgegebenen Abstand und parallel zueinander angeordnet sind; und
eine Vielzahl von geraden Aluminiumprofilelementen (3), die durch Extrudieren oder Ziehen eines Aluminiumrohmaterials hergestellt wurden, um eine bogenförmige Außenfläche aufzuweisen, wobei die Vielzahl der Aluminiumprofilelemente zwischen den Endplatten (1a, 1b) parallel zur Mittelachse der Endplatten überbrückt, wobei die Aluminiumprofilelemente (3) über den gesamten Umfang der Endplatten (1a, 1b) aneinander anstoßend ausgerichtet und stationär mit den Endplatten verbunden sind, und wobei die Aluminiumprofilelemente (3) jeweils eine bogenförmige Fläche, wie in einem Schnitt senkrecht zu deren Längsrichtung gesehen wird, mit dem gleichen Krümmungsradius aufweisen.

**4.** Transfertrommel nach Anspruch 3, bei der die Profilelemente (3) jeweils eine Abmessung (1) aufweisen, gemessen in einer Richtung senkrecht zu ihrer Längsrichtung, wobei die Abmessung ausgedrückt wird als:

$$l = n \times 25{,}4 \ (mm) \quad (n = 1; \ 1{,}5; \ 2; \ 2{,}5; \ 3).$$

**5.** Transfertrommel nach Anspruch 3 oder 4, die außerdem ein Lochelement (5) aufweist, das für jedes der Profilelemente (3) vorhanden ist, wobei das Lochelement (5) eine Vielzahl von Vakuumsauglöchern (6) aufweist, die in einem Abstand in dessen Längsrichtung angeordnet sind.

**6.** Transfertrommel nach einem der Ansprüche 3 bis 5, die außerdem Dickenregulierlöcher (8) aufweist, die in jedem Profilelement für das Realisieren einer ausgeglichenen Dickenverteilung in der Breitenrichtung des Profilelementes vorhanden sind.

**Revendications**

**1.** Procédé de production de tambours de transfert, comprenant les étapes ci-dessous:

fourniture d'une paire de plaques d'extrémité (1a, 1b), agencées de manière coaxiale à une distance prédéterminée et de manière parallèle l'une à l'autre :
préparation de plusieurs éléments profilés en aluminium (3) par extrusion ou étirage d'un matériau d'aluminium brut, de sorte à établir une surface externe arquée ;

liaison des plusieurs éléments profilés en aluminium (3) entre les plaques d'extrémité (1a, 1b), de sorte que les éléments profilés sont alignés sur l'ensemble des périphéries des plaques d'extrémité ;

fixation ferme respective des parties d'extrémité des éléments profilés (3) sur les plaques d'extrémité (1a, 1b), pour former ainsi un tambour ayant une forme cylindrique globale ;

les surfaces externes arquées des éléments profilés (3) ainsi fixées étant continues les unes aux autres, par l'intermédiaire de surfaces à butée réciproque entre elles.

2. Procédé de production de tambours de transfert selon la revendication 1, comprenant en outre l'étape de formation de plusieurs trous d'aspiration à vide (6) dans chaque élément profilé (3), à une distance définie dans la direction longitudinale de ceux-ci.

3. Tambour de transfert, comprenant :

une paire de plaques d'extrémité (1a, 1b), agencées de manière coaxiale à une distance prédéterminée et de manière parallèle l'une à l'autre; et

plusieurs éléments profilés en aluminium droits (3), ayant été préparés par extrusion ou étirage d'un matériau d'aluminium brut pour établir une surface externe arquée, lesdits plusieurs éléments profilés en aluminium assurant la liaison entre les plaques d'extrémité (1a, 1b), de manière parallèle avec un axe central des plaques d'extrémité, lesdits éléments profilés en aluminium (3) étant alignés sur l'ensemble des périphéries des plaques d'extrémité (1a, 1b), butant les unes contre les autres, et fixées de manière ferme sur les plaques d'extrémité, lesdits éléments profilés en aluminium (3) comportant chacun une surface arquée, comme représenté dans une section perpendiculaire à leur direction longitudinale, avec le même rayon de courbure.

4. Tambour de transfert selon la revendication 3, dans lequel lesdits éléments profilés (3) ont chacun une dimension (1), mesurée dans une direction perpendiculaire à sa direction longitudinale, ladite dimension étant exprimée comme suit :

$$l = n \times 25{,}4 \text{ (mm) } (n = 1,\ 1{,}5,\ 2,\ 2{,}5,\ 3).$$

5. Tambour de transfert selon les revendications 3 ou 4, comprenant en outre un élément de trou (5) formé pour chacun des éléments profilés (3), ledit élément de trou (5) comportant plusieurs trous d'aspiration à vide (6) agencés à une distance définie dans sa direction longitudinale.

6. Tambour de transfert selon l'une quelconque des revendications 3 à 5, comprenant en outre des trous d'ajustement de l'épaisseur (8) formés dans chaque élément profilé, pour assurer une répartition équilibrée de l'épaisseur dans la direction de la largeur de l'élément profilé.

# FIG. 1

# FIG. 2

(a)

(b)

(c)

$l = 76.3mm$

FIG. 3

EP 1 721 727 B1

# FIG. 4

(a)

(b)

(c)

120°

(d)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002086585 A
- EP 1293333 A2